(19) Europäisches Patentamt
European Patent Office
Office européen des brevets

(11) **EP 4 667 880 A1**

(12) **EUROPEAN PATENT APPLICATION**
published in accordance with Art. 153(4) EPC

(43) Date of publication:
**24.12.2025 Bulletin 2025/52**

(21) Application number: **24756734.0**

(22) Date of filing: **06.02.2024**

(51) International Patent Classification (IPC):
**G01F 1/66** (2022.01)    **G01N 29/024** (2006.01)

(52) Cooperative Patent Classification (CPC):
**G01F 1/66; G01N 29/024**

(86) International application number:
**PCT/JP2024/003864**

(87) International publication number:
**WO 2024/171884 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 JP 2023023845**

(71) Applicant: **PANASONIC INTELLECTUAL
PROPERTY
MANAGEMENT CO., LTD.
Kadoma-shi, Osaka 571-0057 (JP)**

(72) Inventors:
• **MATSUDA, Masataka
  Kadoma-shi, Osaka 571-0057 (JP)**
• **MIYOSHI, Asako
  Kadoma-shi, Osaka 571-0057 (JP)**
• **SATOU, Masato
  Kadoma-shi, Osaka 571-0057 (JP)**

(74) Representative: **SSM Sandmair
Patentanwälte Rechtsanwalt
Partnerschaft mbB
Joseph-Wild-Straße 20
81829 München (DE)**

(54) **HYDROGEN FLOW RATE/CONCENTRATION METER**

(57)    An object of the present disclosure to provide a hydrogen flow/concentration meter which allows, even if a mixed gas including hydrogen and water vapor is in a high-humidity condition, the flow rate and concentration of hydrogen included in the mixed gas to be measured with high accuracy. A hydrogen flow/concentration meter (100) includes a measuring flow channel (1), a pair of ultrasonic transducers (2, 3), a sensor unit (4b), and an arithmetic unit (30). Through the measuring flow channel (1), a mixed gas including hydrogen and water vapor flows. The pair of ultrasonic transducers (2, 3) are arranged in the measuring flow channel (1) to cross a flow of the mixed gas. The sensor unit (4b) measures a temperature, pressure, and humidity of the mixed gas. The arithmetic unit (30) calculates a flow rate and concentration of hydrogen in the mixed gas using not only a propagation time between the pair of ultrasonic transducers (2, 3) but also the respective measured values of the temperature, pressure, and humidity of the mixed gas.

FIG. 1

## Description

### Technical Field

The present disclosure generally relates to a hydrogen flow/concentration meter, and more particularly relates to a configuration for a hydrogen flow/concentration meter using an ultrasonic wave.

### Background Art

In the fields in which fuel cells are used such as fuel cells and fuel cell vehicles (FCVs), the flow rate and concentration of hydrogen needs to be measured in a hydrogen-mixed gas with high humidity.

A method using an ultrasonic wave has been known in the art as a method for measuring the concentration of a mixed gas including hydrogen (see, for example, Patent Literature 1).

A device disclosed in Patent Literature 1 obtains, first, a sonic velocity in a mixed gas based on the measured value of the propagation time of an ultrasonic wave. Next, the device obtains the average molecular weight of the mixed gas using the value and a measured temperature. Thereafter, the device obtains the concentration of hydrogen, which is one of a plurality of component gases, using respective molecular weights of the plurality of component gases that are already known.

Patent Literature 1 with the known configuration, however, fails to teach how to calculate, when determining the concentration of hydrogen gas as a component gas, the concentration of hydrogen in a situation where the target gas is in a high-humidity condition including water vapor. Thus, it is a challenge how to measure the concentration of hydrogen in a mixed gas in a high-humidity condition.

### Citation List

### Patent Literature

Patent Literature 1: JP 2010-91489 A

### Summary of Invention

In view of the foregoing background, it is therefore an object of the present disclosure to provide a hydrogen flow/concentration meter which allows, even if a mixed gas including hydrogen and water vapor is in a high-humidity condition, the flow rate and concentration of hydrogen included in the mixed gas to be measured with high accuracy.

To overcome the problem with the related art, a hydrogen flow/concentration meter according to an aspect of the present disclosure includes: a measuring flow channel that causes a mixed gas including hydrogen and water vapor to flow therethrough; a pair of ultrasonic transducers arranged in the measuring flow channel to cross a flow of the mixed gas; a transceiver circuit for transmitting and receiving an ultrasonic wave between the pair of ultrasonic transducers; a first signal processor for processing a signal provided by the transceiver circuit; a sensor unit for measuring a temperature, pressure, and humidity of the mixed gas; a second signal processor for obtaining, using the sensor unit, respective measured values of the temperature, pressure, and humidity of the mixed gas; and an arithmetic unit for calculating a flow rate and concentration of hydrogen in the mixed gas using not only a propagation time obtained by the first signal processor between the pair of ultrasonic transducers but also the respective measured values of the temperature, the pressure, and the humidity, all of which are obtained by the second signal processor.

A hydrogen flow/concentration meter according to another aspect of the present disclosure includes: a measuring flow channel that causes a mixed gas including hydrogen and water vapor to flow therethrough; a pair of ultrasonic transducers arranged in the measuring flow channel to cross a flow of the mixed gas; a transceiver circuit for transmitting and receiving an ultrasonic wave between the pair of ultrasonic transducers; a first signal processor for processing a signal provided by the transceiver circuit; a second signal processor for acquiring, from an external device, respective measured values of a temperature, pressure, and humidity of the mixed gas; and an arithmetic unit for calculating a flow rate and concentration of hydrogen in the mixed gas using not only a propagation time obtained by the first signal processor between the pair of ultrasonic transducers but also the respective measured values of the temperature, the pressure, and the humidity, all of which are obtained by the second signal processor.

A hydrogen flow/concentration meter according to still another aspect of the present disclosure includes: a measuring flow channel that causes a mixed gas including hydrogen and water vapor to flow therethrough; a pair of ultrasonic transducers arranged in the measuring flow channel to cross a flow of the mixed gas; a transceiver circuit for transmitting and receiving an ultrasonic wave between the pair of ultrasonic transducers; a first signal processor for processing a signal provided by the transceiver circuit; a sensor unit for measuring at least one of a temperature, pressure, or humidity of the mixed gas; a second signal processor for obtaining, using the sensor unit, a measured value of the at least one of the temperature, pressure, or humidity of the mixed gas and acquiring, from an external device, a value of at least remaining one of the temperature, pressure, or humidity of the mixed gas as a measured value; and an arithmetic unit for calculating a flow rate and concentration of hydrogen in the mixed gas using not only a propagation time obtained by the first signal processor between the pair of ultrasonic transducers but also the respective measured values of the temperature, the pressure, and the humidity, all of which are obtained by the second signal processor.

**Brief Description of Drawings**

[FIG. 1] FIG. 1 is a cross-sectional view illustrating a configuration for a hydrogen flow/concentration meter according to a first embodiment of the present disclosure;
[FIG. 2] FIG. 2 is a partial cross-sectional view taken along the plane A-A shown in FIG. 1 according to the first embodiment of the present disclosure;
[FIG. 3] FIG. 3 is a perspective view illustrating the appearance of a flow channel part of the hydrogen flow/concentration meter according to the first embodiment of the present disclosure;
[FIG. 4] FIG. 4 is an exploded perspective view illustrating respective constituent elements of the hydrogen flow/concentration meter according to the first embodiment of the present disclosure; and
[FIG. 5] FIG. 5 is a cross-sectional view illustrating a configuration for a hydrogen flow/concentration meter according to a second embodiment of the present disclosure.

**Description of Embodiments**

A hydrogen flow/concentration meter according to a first aspect includes: a measuring flow channel that causes a mixed gas including hydrogen and water vapor to flow therethrough; a pair of ultrasonic transducers arranged in the measuring flow channel to cross a flow of the mixed gas; a transceiver circuit for transmitting and receiving an ultrasonic wave between the pair of ultrasonic transducers; a first signal processor for processing a signal provided by the transceiver circuit; a sensor unit for measuring a temperature, pressure, and humidity of the mixed gas; a second signal processor for obtaining, using the sensor unit, respective measured values of the temperature, pressure, and humidity of the mixed gas; and an arithmetic unit for calculating a flow rate and concentration of hydrogen in the mixed gas using not only a propagation time obtained by the first signal processor between the pair of ultrasonic transducers but also the respective measured values of the temperature, the pressure, and the humidity, all of which are obtained by the second signal processor. The hydrogen flow/concentration meter having this configuration may calculate the flow rate and concentration of hydrogen included in the flow, thus allowing, even if the target gas under measurement is in a high-humidity condition, the flow rate and concentration of hydrogen to be measured accurately using the temperature, pressure, and relative humidity thus measured. Consequently, a highly practical hydrogen flow/concentration is realized.
In a hydrogen flow/concentration meter according to a second aspect, which may be implemented in conjunction with the first aspect, the measuring flow channel is configured as a multilayer flow channel partitioned by a partition, thus contributing to rectifying the flow and stabilizing a turbulence and thereby reducing a variation in the physical quantity measured (namely, temperature, pressure, and relative humidity). Consequently, the flow rate and concentration may be measured with good stability.
Embodiments will now be described in detail with reference to the accompanying drawings. Note that unnecessarily detailed description will be omitted. For example, detailed description of already well-known matters and redundant description of substantially the same configuration will be omitted. This is done to avoid making the following description overly redundant and thereby help one of ordinary skill in the art understand the present disclosure easily.
In addition, note that the accompanying drawings and the following description are provided to help one of ordinary skill in the art understand the present disclosure fully and should not be construed as limiting the scope of the present disclosure, which is defined by the appended claims.

(First embodiment)

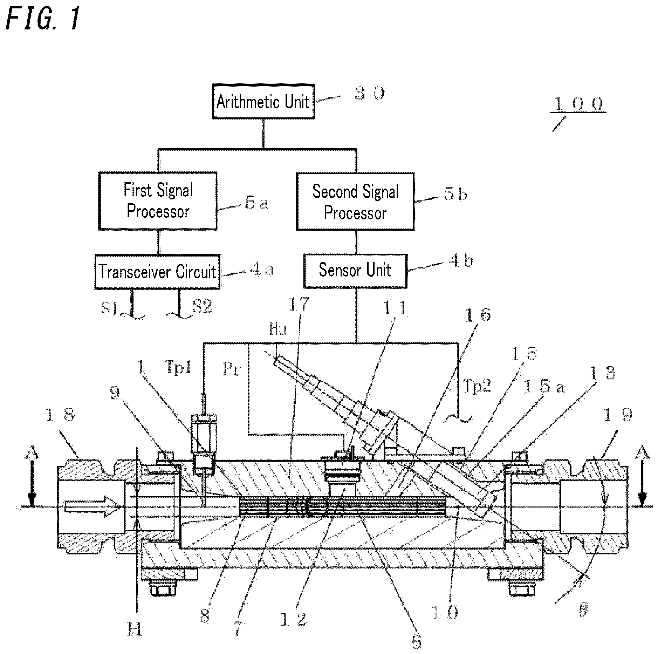

A first embodiment will be described with reference to FIGS. 1-4.

[1-1. Configuration]

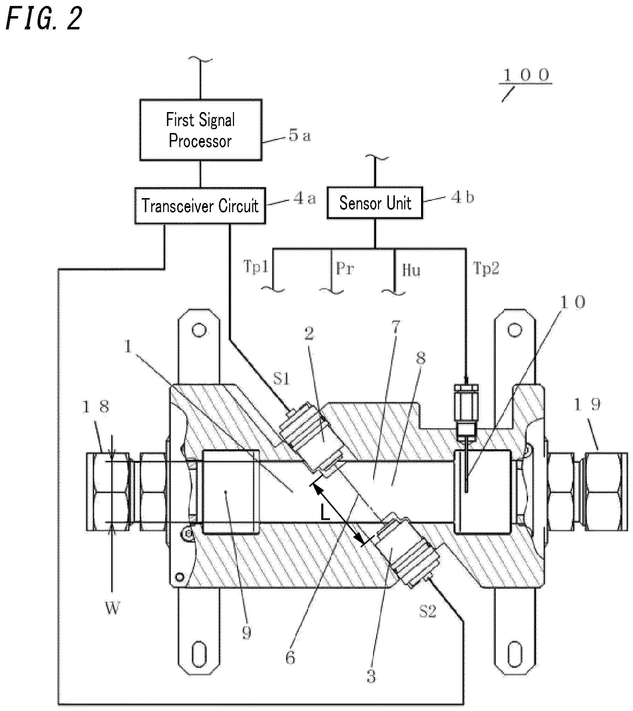

FIG. 1 illustrates a cross section of the body and respective constituent elements of a hydrogen flow/concentration meter according to a first embodiment of the present disclosure. FIG. 2 is a partial cross-sectional view taken along the plane A-A shown in FIG. 1.

As shown in FIGS. 1 and 2, a measuring flow channel 1, through which a fluid under measurement such as a mixed gas including hydrogen flows, is formed along the centerline of a flow channel body 17. The measuring flow channel 1 is provided with: a pair of ultrasonic transducers 2, 3 which are arranged at upstream and downstream points, respectively, to cross the flow of the fluid under measurement; a transceiver circuit 4a for transmitting and receiving an ultrasonic wave between the pair of ultrasonic transducers 2, 3; and a first signal processor 5a for processing a signal provided by the transceiver circuit 4a.

The transceiver circuit 4a is electrically connected to the ultrasonic transducers 2, 3 to transmit and receive a signal to/from the ultrasonic transducers 2, 3. The first signal processor 5a is connected to the transceiver circuit 4a to process a signal. The reference signs S1, S2 written at the respective ends of the lines extended from the transceiver circuit 4a indicate that the transceiver circuit 4a is connected to the ultrasonic transducers 2, 3.

An ultrasonic wave propagation path 6 through which an ultrasonic wave propagates is formed between the ultrasonic transducers 2, 3.

In this embodiment, a rectangular cross section of the measuring flow channel 1 having a height H and a width W is divided in the height H direction by five partitions 7 into six sections, thereby forming a multilayer flow channel 8. This configuration not only increases the aspect ratio of the flow channel cross section of each layer of the multilayer flow channel 8 to turn the flow into a two-dimensional flow but also reduces the Reynolds number to rectify the flow and stabilize the turbulence.

In addition, a sensor unit 4b for measuring the temperature, pressure, and humidity of the fluid under measurement is further provided. The sensor unit 4b is made up of a temperature sensor, a pressure sensor, and a relative humidity sensor as will be described later.

To measure the temperature of the fluid under measurement flowing through the ultrasonic wave propagation path 6, temperature sensors 9, 10 are respectively provided at the inlet and outlet of the measuring flow channel 1.

In addition, a pressure sensor 11 for measuring the pressure of the fluid under measurement is disposed in the middle along the flow direction of the ultrasonic wave propagation path 6. In the ultrasonic wave propagation path 6 having the multilayer structure, the pressure sensor 11 is configured to measure the pressure through a pressure connection hole 12 connected to the outermost layer of the multilayer structure.

Furthermore, to avoid affecting the flow through the ultrasonic wave propagation path 6, a relative humidity sensor 13 is disposed downstream of the ultrasonic wave propagation path 6 and is inserted obliquely from the upper surface of the flow channel body 17 toward a downstream position with respect to the flow direction to form an acute angle θ.

An outer peripheral path 15a is formed as a gap around the outer periphery of the relative humidity sensor 13 and a connection path 16 connected to the multilayer flow channel 8 is provided through an assembling hole 15 of the relative humidity sensor 13. This connection path 16 is provided substantially perpendicularly to the assembling hole 15 of the relative humidity sensor 13. Thus, a bypass flow channel is formed by the connection path 16 running obliquely upward from the multilayer flow channel 8 and the outer peripheral path 15a opened at a downstream position on the multilayer flow channel 8.

The temperature, pressure, and humidity are measured by the sensor unit 4b made up of the temperature sensors 9, 10, the pressure sensor 11, and the relative humidity sensor 13, and signals thus obtained are processed by the second signal processor 5b.

Note that electrical signals provided by the respective sensors are actually connected to the sensor unit 4b through separate lines, which are indicated on the drawings by a single line for the sake of convenience. Also, the reference signs Tp1, Tp2, Pr, Hu written at the respective ends of the branches of the single line indicate connection to the temperature sensors 9, 10, the pressure sensor 11, and the relative humidity sensor 13. respectively.

The arithmetic unit 30 performs arithmetic processing based on a signal provided by the first signal processor 5a and a signal provided by the second signal processor 5b.

In this configuration, the temperature sensors 9, 10 are respectively arranged at upstream and downstream positions on the ultrasonic wave propagation path 6, thereby allowing for accurately estimating the temperature of the fluid flowing through the ultrasonic wave propagation path 6 without affecting the propagation or flow of the ultrasonic wave.

In addition, the pressure sensor 11 is disposed at the middle of the ultrasonic wave propagation path 6 to face the outermost layer of the multilayer flow channel 8, thereby reducing the likelihood of the effect of the pressure connection hole 12 on the flow reaching other flow channels of the multilayer flow channel of the ultrasonic wave propagation path 6. Consequently, this allows for estimating the pressure of the fluid flowing through the ultrasonic wave propagation path 6 without significantly affecting the propagation or flow of the ultrasonic wave.

In such measurement of the relative humidity, if the water included in the fluid under measurement adheres, due to condensation, for example, to the relative humidity sensor 13, for example, then the accuracy of measurement may be affected. To avoid such a situation, a bypass flow channel is formed to extend from the multilayer flow channel 8 via the connection path 16 and run along the outer peripheral path 15a left as a gap on the outer periphery of the relative humidity sensor 13 to be connected to a downstream position on the multilayer flow channel.

This allows, even if condensation is produced around the relative humidity sensor 13, drops of water to be flow out without staying there. If the flow velocity is high, this bypass flow channel allows the drops of water to be blown toward the downstream end. Also, even if the flow velocity is low, the drops of water will still be caused to fall by gravity even when the measuring flow channel 1 is put horizontally as shown in FIG. 1, because the relative humidity sensor 13 and the outer peripheral path 15a and connection path 16 surrounding the relative humidity sensor 13 are all tilted with respect to the flow direction in the measuring flow channel 1.

In addition, the outer peripheral path 15a and the connection path 16 are tilted in mutually opposite directions with respect to the vertical direction defined with respect to the measuring flow channel 1. Thus, no matter whether the outlet of the measuring flow channel 1 is tilted upward or downward, either the outer peripheral path 15a or the connection path 16 will be tilted downward, thus ensuring that the drops of water will be caused to fall by gravity.

Note that to facilitate the fall of the drops of water by gravity, it is preferable that the measuring flow channel 1 be arranged such that the outlet end thereof faces obliquely upward to make it easier for the drops of water to fall toward the connection path 16 with the broader cross-sectional area. As the case may be, the measuring flow channel 1 may even be arranged perpendicularly such that the outlet end thereof faces vertically upward.

[1-2. Operation]

Next, it will be described how a hydrogen flow/concentration meter according to the present disclosure operates.

The fluid under measurement is a mixed gas including hydrogen and flows in a high-humidity condition into the hydrogen flow/concentration meter from the direction indicated by the open arrow shown in FIG. 1.

In this case, an ultrasonic wave is transmitted and received between the ultrasonic transducers 2, 3 via the ultrasonic wave propagation path 6. The propagation time (tup) of the ultrasonic wave in the forward direction (i.e., from the downstream end toward the upstream end) and the propagation time (tdw) of the ultrasonic wave in the reverse direction (i.e., from the upstream end toward the downstream end) in the meantime are measured by the transceiver circuit 4a and the first signal processor 5a.

The flow velocity is calculated by the arithmetic unit 30 by a known method based on the propagation times thus obtained and multiplied by the cross-sectional area of the measuring flow channel 1, thereby calculating a flow rate.

This value is corrected using the temperatures obtained from the temperature sensors 9, 10 and the pressure obtained from the pressure sensor 11 as will be described later, thereby obtaining a flow rate (Q) in a standard condition.

Note that the flow rate of only hydrogen which forms part of the flow rate (Q) thus obtained may be determined by obtaining a hydrogen concentration as will be described later and multiplying the flow rate (Q) by the hydrogen concentration.

The temperature of the fluid under measurement may be measured by having an upstream temperature (T1) measured by the temperature sensor 9 provided at an upstream position on the measuring flow channel 1 and having a downstream temperature (T2) measured by the temperature sensor 10 provided at a downstream position on the measuring flow channel 1. A signal representing the temperature at the upstream position and a signal representing the temperature at the downstream position are loaded into, and processed by, the second signal processor 5b and then provided as respective temperatures to the arithmetic unit 30. Based on these two temperatures, the arithmetic unit 30 calculates an averaged temperature (measured temperature Tm).

The pressure of the fluid under measurement is measured by the pressure sensor 11 provided in the middle along the flow direction of the ultrasonic wave propagation path 6 in which the flow is stabilized by the multilayer flow channel 8. A signal provided by the pressure sensor 11 is loaded into, and processed by, the second signal processor 5b and then supplied as pressure (p) to the arithmetic unit 30.

The relative humidity of the fluid under measurement is measured by the relative humidity sensor 13 provided downstream of the ultrasonic wave propagation path 6. A signal provided by the relative humidity sensor 13 is loaded into, and processed by, the second signal processor 5b and then supplied as a relative humidity value (h) to the arithmetic unit 30.

[1-3 Concentration measuring method]

Next, it will be described how to calculate a hydrogen concentration using the physical quantities (namely, the propagation time, the temperature, the pressure, and the relative humidity) thus measured.

First, the concentrations of a mixed gas of two types of gases may be obtained in the following procedure.

The sonic velocity c in a gas, the molecular weight M, the heat capacity ratio $\gamma$, the absolute temperature T, and the gas constant R satisfy the following relational expression:

[Mathematical Expression 1]

$$c^2 = \frac{\gamma RT}{M} \qquad\qquad (1)$$

In this case, the sonic velocity c is calculated by the following equation based on a distance L between ultrasonic sensors and an average value $t_{ave}$ of propagation times $t_{up}$, $t_{dw}$ measured:
[Mathematical Expression 2]

$$c = \frac{L}{t_{ave}} \qquad\qquad (2)$$

Also, if the physical properties of the two types of gases are set as Gas #1 (molecular weight $M_1$, constant pressure specific heat $C_{p1}$, constant volume specific heat $C_{v1}$) and Gas #2 (molecular weight $M_2$, constant pressure specific heat $C_{p2}$, constant volume specific heat $C_{v2}$) and the concentration of Gas #1 is x, then the molecular weight and the heat capacity ratio of the mixed gas may be described as follows:
[Mathematical Expression 3]

$$M = xM_1 + (1-x)M_2 \qquad\qquad (3)$$

[Mathematical Expression 4]

$$\gamma = \frac{xc_{p1} + (1-x)c_{p2}}{xc_{v1} + (1-x)c_{v2}} \qquad\qquad (4)$$

The concentration x may be obtained by substituting equations (2) to (4) into equation (1), substituting the measured temperature Tm for the absolute temperatures T in equation (1), and solving equation (1) with respect to x.

Next, a hydrogen concentration x in a mixed gas of three types of gases, including water vapor (molecular weight $M_w$, constant pressure specific heat $c_{pw}$, constant volume specific heat $c_{vw}$) added as a third gas, may be obtained in the following procedure:

First, a water vapor concentration in the mixed gas may be determined based on the relative humidity ($H_m$) measured, the pressure ($P_m$), and the temperature ($T_m$) measured. The water vapor concentration in the mixed gas may be described as follows by the Tetens equation:
[Mathematical Expression 5]

$$x_w = 0.61 \cdot 10^{\frac{7.5T_m}{T_m+237.3}} \cdot \frac{H_m}{100} \cdot \frac{1}{P_m} \qquad\qquad (5)$$

In this case, equation (1) may be described as follows by applying the same calculations as the one expressed by the equations (3) and (4):
[Mathematical Expression 6]

$$c^2 = \frac{\dfrac{xc_{p1} + (1-x-x_w)c_{p2} + x_w c_{pw}}{xc_{v1} + (1-x-x_w)c_{v2} + x_w c_{vw}} RT_m}{xM_1 + (1-x-x_w)M_2 + x_w M_w} \qquad\qquad (6)$$

The hydrogen concentration x may be obtained by solving this equation (6).

If the average propagation time is $t_{ave1}$ and the temperature is $T_{m1}$ when hydrogen is actually measured and x =1 and $x_w$ =0 in equations (2) and (6), then the actual distance L = $L_1$ between the ultrasonic sensors may be obtained. Consequently, the concentration of hydrogen may be measured with high accuracy.

Furthermore, if the average propagation time is $t_{ave2}$ and the temperature is $T_{m2}$ when nitrogen is actually measured and x =0 and $x_w$ =0 in the equations (2) and (6), then the actual distance L = $L_2$ between the ultrasonic sensors may be obtained.

$L_1 = L_2$ is ideally satisfied. Actually, however, a difference may be caused between the distance $L_2$ and the

distance $L_1$ due to the difference between a theoretical value and an actually measured value and owing to a fixed error involved with the conversion of the propagation time.

In this case, the sonic velocity is defined by the following equation (7) using a corrected propagation time $t_{ave} - t_d$ calculated by subtracting the differential time $t_d$ from the propagation time $t_{ave}$, thereby obtaining the differential time $t_d$ and the distance L (= $L_1$ = $L_2$) between the ultrasonic sensors that allow L1 = L2 to be satisfied.

[Mathematical Expression 7]

$$c = \frac{L}{t_{ave} - t_d} \qquad (7)$$

In this case, $t_d$ and L may be obtained by numerical value analysis using $t_d$ = 0 as an initial value under the condition that $L_1$ = $L_2$ be satisfied. Alternatively, $t_d$ and L may also be obtained algebraically by the following equations (8) and (9):

[Mathematical Expression 8]

$$\left(\frac{L_1}{t_{ave1} - t_d}\right)^2 = \frac{\frac{c_{p1}}{c_{v1}} RT_{m1}}{M_1} \qquad (8)$$

[Mathematical Expression 9]

$$\left(\frac{L_2}{t_{ave2} - t_d}\right)^2 = \frac{\frac{c_{p2}}{c_{v2}} RT_{m2}}{M_2} \qquad (9)$$

If the differential time $t_d$ and the distance L between the ultrasonic sensors which are calculated by these equations (8) and (9) are used to make the calculations of the equations (6) and (7), then the concentration may be measured more accurately.

[1-4. Advantages]

As can be seen from the foregoing description, a hydrogen flow/concentration meter 100 according to this embodiment includes: a measuring flow channel 1, through which a mixed gas including hydrogen and water vapor flows; a pair of ultrasonic transducers 2, 3 arranged in the measuring flow channel 1 to cross a flow of the mixed gas; a transceiver circuit 4a for transmitting and receiving an ultrasonic wave between the pair of ultrasonic transducers 2, 3; a first signal processor 5a for processing a signal provided by the transceiver circuit 4a; a sensor unit 4b for measuring a temperature, pressure, and humidity of the mixed gas; a second signal processor 5b for obtaining, using the sensor unit 4b, respective measured values of the temperature, pressure, and humidity of the mixed gas; and an arithmetic unit 30 for calculating a flow rate and concentration of hydrogen in the mixed gas using not only a propagation time obtained by the first signal processor 5a between the pair of ultrasonic transducers 2, 3 but also the respective measured values of the temperature, the pressure, and the humidity, all of which are obtained by the second signal processor 5b. This allows a hydrogen concentration in a mixed gas including hydrogen to be measured with sufficient accuracy even in a high-humidity environment, thus enabling the flow rate and concentration to be measured with practical accuracy.

In addition, the measuring flow channel 1 is configured as a multilayer flow channel partitioned by partitions 7, thus contributing to rectifying the flow and thereby reducing a variation in the physical quantities measured (namely, temperature, pressure, and relative humidity). Consequently, the measurement may be made with good stability and sufficient accuracy.

In the exemplary embodiment described above, two temperature sensors are provided at upstream and downstream positions, respectively, on the ultrasonic wave propagation path. However, the temperature in the ultrasonic wave propagation path may also be estimated even by providing only one of these two temperature sensors.

Furthermore, the temperature sensors may also be inserted into the ultrasonic wave propagation path as long as the flow and ultrasonic wave propagation are hardly affected.

Furthermore, in the exemplary embodiment described above, the pressure sensor is provided to be directly inserted into an opening of the ultrasonic wave propagation path. Alternatively, the pressure sensor may also be provided distant from the flow channel using a pressure connection path. Furthermore, in the exemplary embodiment described above, the pressure sensor is arranged to face the upper surface of the outermost layer of the multilayer flow channel. Alternatively, the pressure sensor may also be arranged on a side surface of the multilayer flowchart so that the pressure may be measured and averaged over multiple layers.

Furthermore, in the exemplary embodiment described above, the relative humidity sensor is provided at a downstream position on the ultrasonic wave propagation path. Alternatively, the relative humidity sensor may also be provided distant from the flow channel using a connection path. Still alternatively, two less expensive relative humidity sensors of a smaller size may be provided at upstream and downstream positions, respectively, on the ultrasonic wave propagation path and their average value may be adopted.

[1-5. Assembly configuration]

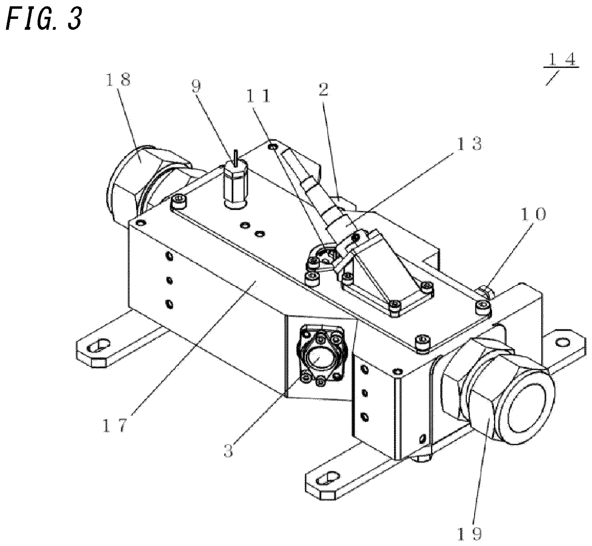

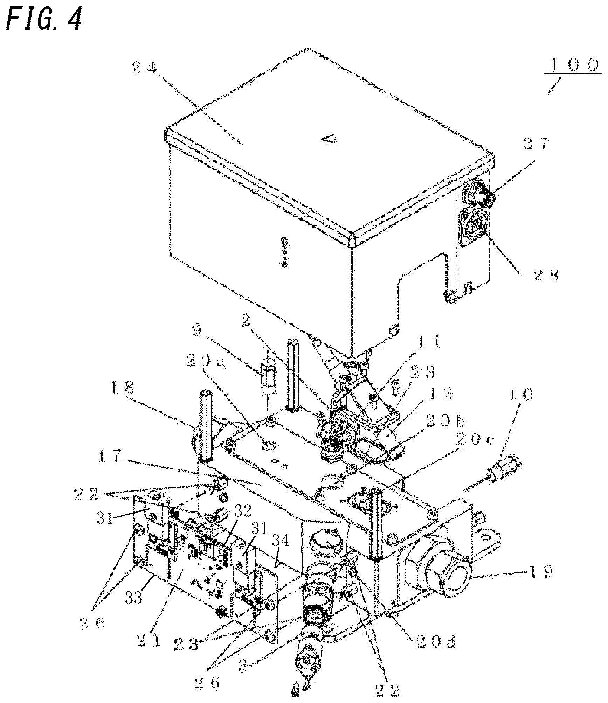

FIGS. 3 and 4 illustrate an assembly configuration for the hydrogen flow/concentration meter shown in FIGS. 1 and 2. FIG. 3 is a perspective view illustrating the appearance of a flow channel part 14 of the hydrogen flow/concentration meter 100. FIG. 4 is an exploded perspective view of the overall hydrogen flow/concentration meter 100 including the flow channel part 14 shown in FIG. 3.

FIG. 3 is a perspective view illustrating the appearance of the flow channel part 14 in which the ultrasonic transducers 2, 3, the temperature sensors 9, 10, the pressure sensor 11, and the relative humidity sensor 13 are arranged. The flow channel body 17 houses the measuring flow channel 1 as shown in FIG. 1 and includes an inlet connector 18 on the inlet end of the measuring flow channel 1 and an outlet connector 19 on the outlet end thereof to make pipe connection.

FIG. 4 is an exploded perspective view illustrating respective constituent elements of the hydrogen flow/concentration meter 100. The flow channel body 17 houses the measuring flow channel 1 inside. The upper part of the flow channel body 17 is provided with mounting holes 20a, 20b, 20c, into which the temperature sensor 9, the pressure sensor 11, and the relative humidity sensor 13 are respectively inserted. A side surface, shown on the front side in FIG. 4, of the flow channel body 17 is provided with not only a mounting hole 20d into which the ultrasonic transducer 3 is inserted but also a plurality of mounting portions 22 for mounting a control board 21 on which the transceiver circuit 4a and the first signal processor 5a and the second signal processor 5b are arranged. Although not shown in FIG. 4, another side surface thereof on the rear side in FIG. 4 is provided with another mounting hole into which the ultrasonic transducer 2 is inserted.

A longer side portion 32 of the rectangular control board 21 is provided with a plurality of (e.g., two in the example shown in FIG. 4) connector terminals 31. A connector terminal (not shown) provided at the tip of a cable extended from an information processor (not shown) outside of the hydrogen flow/concentration meter 100 may be inserted into each of the connector terminals 31 to electrically connect the two connector terminals to the information processor. In this case, the connector terminals 31 are mounted perpendicularly to the longer side and thickness of the control board 21. This may reduce the likelihood of the control board 21 being bent or warped by the load applied when the connector terminal is inserted into one of the connector terminals 31 of the control board 21. If the control board 21 were bent or warped repeatedly, cracks would be caused to the control board 21. In contrast, according to this embodiment, mounting the connector terminals 31 to the control board 21 as described above may avoid causing cracks to the control board 21.

Also, when the control board 21 is mounted onto the flow channel body 17, a longer side portion 33 of the lower part of the control board 21 (i.e., the longer side facing the longer side provided with the connector terminals 31) is located above the bottom surface 34 of the flow channel body 17. In other words, the longer side portion 33 on the lower part of the control board 21 is not flush with the bottom surface 34 of the flow channel body 17. Thus, even if water is collected in the vicinity of the bottom surface of the hydrogen flow/concentration meter 100, the electric circuit of the control board 21 may be prevented from being short-circuited by the collected water by providing the control board 21 above the bottom surface 34 of the flow channel body 17.

Note that the flow channel part 14 is formed by hermetically mounting, via hermetically sealing members 23, the ultrasonic transducers 2, 3, the temperature sensors 9, 10, the pressure sensor 11, and the relative humidity sensor 13 onto the flow channel body 17. Then, the overall apparatus is assembled by fixing the control board 21 to the mounting portion 22 with screws and attaching a shell case 24 to cover the assembly of these members from over the assembly. Note that illustration of cables used to connect the ultrasonic transducers 2, 3, the temperature sensors 9, 10, the pressure sensor 11, and the relative humidity sensor 13 to the control board 21 and illustration of cables used to connect, to the control board 21, connection connectors 27, 28 to be connected to an external device are omitted.

In this manner, the ultrasonic transducers 2, 3, the temperature sensors 9, 10, the pressure sensor 11, the relative humidity sensor 13, and the control board 21 are assembled onto the flow channel body 17 from the upper surface and both side surfaces thereof and then the shell case 24 is attached thereto from over the assembly of these members, thereby realizing a compact apparatus. This configuration facilitates the assembling process and contributes to improving the productivity.

In the exemplary embodiment of the present disclosure described above, the measuring flow channel 1 is configured as a multilayer flow channel. However, this is only an example and should not be construed as limiting. Alternatively, the measuring flow channel 1 may also have a single layer structure in which the flow channel is not divided by any partition 7. Also, the cross-sectional shape of the measuring flow channel 1 does not have to be a rectangular cross section but may be a circular cross section or a substantially circular cross section as well.

(Second embodiment)

[1-1. Configuration]

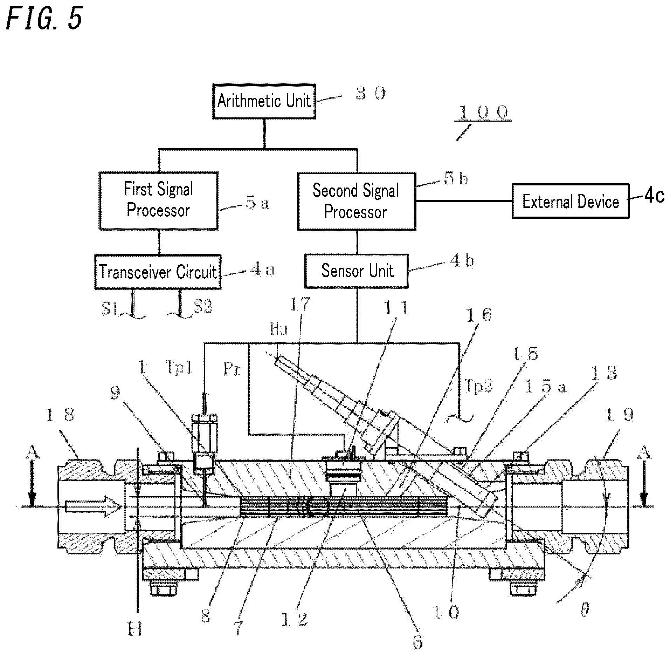

A hydrogen flow/concentration meter 100 according to a second embodiment acquires, from an external device 4c, some or all values of the temperature, pressure, and humidity (relative humidity) of the mixed gas as shown in FIG. 5. For example, the hydrogen flow/concentration meter 100 acquires the temperature, pressure, and humidity as input values provided by the external device 4c for the second signal processor 5b.

In the first embodiment, the temperature is obtained by measuring by the temperature sensors 9, 10. In the second embodiment, the temperature may be acquired from the external device 4c. If the temperature is already known by another means, then the temperature sensors 9, 10 do not have to be provided but an input value provided by the external device 4c may be used as the measured value of the temperature.

In the first embodiment, the pressure is obtained by measuring by the pressure sensor 11. In the second embodiment, the pressure may be acquired from the external device 4c. If the pressure is already known by another means, then the pressure sensor 11 does not have to be provided but an input value provided by the external device 4c may be used as the measured value of the pressure.

In the first embodiment, the humidity is obtained by measuring by the relative humidity sensor 13. In the second embodiment, the humidity may be acquired from the external device 4c. If the humidity is already known by another means, then the relative humidity sensor 13 does not have to be provided but an input value provided by the external device 4c may be used as the measured value of the humidity.

In the hydrogen flow/concentration meter 100 according to this embodiment, the second signal processor 5b may acquire, for example, all values representing the temperature, pressure, and humidity of the mixed gas as measured values from the external device 4c.

Alternatively, in the hydrogen flow/concentration meter 100 according to this embodiment, the second signal processor 5b may obtain at least one measured value representing the temperature, pressure, or humidity of the mixed gas using the sensor unit 4b and acquire a value representing at least remaining one of the temperature, pressure, or humidity of the mixed gas as a measured value from the external device 4c.

In a first example, the second signal processor 5b obtains a measured value of the temperature using the sensor unit 4b and acquires pressure and humidity values from the external device 4c. In a second example, the second signal processor 5b obtains a measured value of the pressure using the sensor unit 4b and acquires temperature and humidity values from the external device 4c. In a third example, the second signal processor 5b obtains a measured value of the humidity using the sensor unit 4b and acquires temperature and pressure values from the external device 4c.

In a fourth example, the second signal processor 5b obtains measured values of the temperature and pressure using the sensor unit 4b and acquires a humidity value from the external device 4c. In a fifth example, the second signal processor 5b obtains measured values of the temperature and humidity using the sensor unit 4b and acquires a pressure value from the external device 4c. In a sixth example, the second signal processor 5b obtains measured values of the pressure and humidity using the sensor unit 4b and acquires a temperature value from the external device 4c.

Optionally, the external device 4c may have the function of accepting the input of temperature, pressure, and humidity values of the mixed gas. For example, the external device 4c includes an input unit for accepting the input of the temperature, pressure, and humidity values of the mixed gas. In that case, the second signal processor 5b acquires, as measured values, the input values provided by the external device 4c.

[1-2. Method for measuring concentration]

A method for measuring the concentration according to this embodiment is the same as the method for measuring the concentration according to the first embodiment, and therefore, description thereof will be omitted herein.

[1-3. Advantages]

A hydrogen flow/concentration meter 100 according to this embodiment, as well as the hydrogen flow/concentration meter 100 according to the first embodiment, may also measure, even if the gas under measurement is in a high-humidity condition, the flow rate and concentration of hydrogen accurately using the measured values of the temperature, pressure, and relative humidity. Consequently, a highly practical hydrogen flow/concentration meter 100 is realized.

In the exemplary embodiments of the present disclosure described above, the measuring flow channel 1 is configured as a multilayer flow channel. Alternatively, the measuring flow channel 1 may also have a single layer structure in which the flow channel is not divided by any partition 7. Also, the cross-sectional shape of the measuring flow channel 1 does not have to be a rectangular cross section but may be a circular cross section or a substantially circular cross section as well.

In the first and second embodiments of the present disclosure, a so-called "Z-path" in which the pair of ultrasonic transducers 2, 3 are arranged to form a tilt angle θ with respect to the measuring flow channel 1 is used as the ultrasonic wave propagation path. However, this configuration is only an example and should not be construed as limiting.

Alternatively, a path involving reflection, such as a so-called "V-path," i.e., a flow channel formed by arranging the pair of ultrasonic transducers 2, 3 to cause an ultrasonic wave to travel across the flow of the mixed gas twice in the measuring flow channel 1, may also be adopted as the ultrasonic wave propagation path.

In the first and second embodiments of the present disclosure described above, the mixed gas is supposed to include nitrogen as an additional component of the mixed gas other than hydrogen. However, this configuration is only an example and should not be construed as limiting. Optionally, the mixed gas may also include, as gases other than hydrogen: hydrocarbon (HC) such as methane; carbon dioxide; helium; and argon, not just nitrogen.

(Aspects)

The exemplary embodiments and their variations described above are specific implementations of the following aspects of the present disclosure.

A hydrogen flow/concentration meter (100) according to a first aspect includes a measuring flow channel (1), a pair of ultrasonic transducers (2, 3), a transceiver circuit (4a), a first signal processor (5a), a sensor unit (4b), a second signal processor (5b), and an arithmetic unit (30). Through the measuring flow channel (1), a mixed gas including hydrogen and water vapor flows. The pair of ultrasonic transducers (2, 3) are arranged in the measuring flow channel (1) to cross a flow of the mixed gas. The transceiver circuit (4a) is a circuit for transmitting and receiving an ultrasonic wave between the pair of ultrasonic transducers (2, 3). The first signal processor (5a) is a signal processor for processing a signal provided by the transceiver circuit (4a). The sensor unit (4b) is a sensor unit for measuring a temperature, pressure, and humidity of the mixed gas. The second signal processor (5b) obtains, using the sensor unit (4b), respective measured values of the temperature, pressure, and humidity of the mixed gas. The arithmetic unit (30) calculates a flow rate and concentration of hydrogen in the mixed gas using not only a propagation time obtained by the first signal processor (5a) between the pair of ultrasonic transducers (2, 3) but also the respective measured values of the temperature, the pressure, and the humidity, all of which are obtained by the second signal processor (5b).

A hydrogen flow/concentration meter (100) according to the first aspect calculates the flow rate and concentration of hydrogen included in the flow, thus allowing, even if the target gas under measurement is in a high-humidity condition, the flow rate and concentration of hydrogen to be measured accurately using the temperature, pressure, and relative humidity thus measured. Consequently, a highly practical hydrogen flow/concentration meter (100) is realized.

A hydrogen flow/concentration meter (100) according to a second aspect includes a measuring flow channel (1), a pair of ultrasonic transducers (2, 3), a transceiver circuit (4a), a first signal processor (5a), a sensor unit (4b), a second signal processor (5b), and an arithmetic unit (30). Through the measuring flow channel (1), a mixed gas including hydrogen and water vapor flows. The pair of ultrasonic transducers (2, 3) are arranged in the measuring flow channel (1) to cross a flow of the mixed gas. The transceiver circuit (4a) is a circuit for transmitting and receiving an ultrasonic wave between the pair of ultrasonic transducers (2, 3). The first signal processor (5a) is a signal processor for processing a signal provided by the transceiver circuit (4a). The second signal processor (5b) acquires, from an external device (4c), respective measured values of a temperature, pressure, and humidity of the mixed gas. The arithmetic unit (30) calculates a flow rate and concentration of hydrogen in the mixed gas using not only a propagation time obtained by the first signal processor (5a) between the pair of ultrasonic transducers (2, 3) but also the respective measured values of the temperature, the pressure, and the humidity, all of which are obtained by the second signal processor (5b).

A hydrogen flow/concentration meter (100) according to the second aspect calculates the flow rate and concentration of hydrogen included in the flow, thus allowing, even if the target gas under measurement is in a high-humidity condition, the flow rate and concentration of hydrogen to be measured accurately using the temperature, pressure, and relative humidity thus measured. Consequently, a highly practical hydrogen flow/concentration meter (100) is realized.

A hydrogen flow/concentration meter (100) according to a third aspect includes a measuring flow channel (1), a pair of ultrasonic transducers (2, 3), a transceiver circuit (4a), a first signal processor (5a), a sensor unit (4b), a second signal processor (5b), and an arithmetic unit (30). Through the measuring flow channel (1), a mixed gas including hydrogen and water vapor flows. The pair of ultrasonic transducers (2, 3) are arranged in the measuring flow channel (1) to cross a flow of the mixed gas. The transceiver circuit (4a) is a circuit for transmitting and receiving an ultrasonic wave between the pair of ultrasonic transducers (2, 3). The first signal processor (5a) is a signal processor for processing a signal provided by the transceiver circuit (4a). The sensor unit (4b) is a sensor unit for measuring at least one of a temperature, pressure, or humidity of the mixed gas. The second signal processor (5b) obtains, using the sensor unit (4b), a measured value of the at least one of the temperature, pressure, or humidity of the mixed gas and acquires, from an external device (4c), a value of at least remaining one of the temperature, pressure, or humidity of the mixed gas as a measured value. The arithmetic unit (30) calculates a flow rate and concentration of hydrogen in the mixed gas using not only a propagation time obtained by the first signal processor (5a) between the pair of ultrasonic transducers (2, 3) but also the respective measured values of the temperature, the pressure, and the humidity, all of which are obtained by the second signal processor (5b).

A hydrogen flow/concentration meter (100) according to the third aspect calculates the flow rate and concentration of hydrogen included in the flow, thus allowing, even if the target gas under measurement is in a high-humidity condition, the flow rate and concentration of hydrogen to be measured accurately using the temperature, pressure, and relative humidity thus measured. Consequently, a highly practical hydrogen flow/concentration meter (100) is realized.

In a hydrogen flow/concentration meter (100) according to a fourth aspect, which may be implemented in conjunction with any one of the first to third aspects, the measuring flow channel (1) is configured as a multilayer flow channel (8) partitioned by at least one partition (7).

The hydrogen flow/concentration meter (100) according to the fourth aspect contributes to rectifying the flow and stabilizing a turbulence and thereby reducing a variation in the physical quantities measured (namely, temperature, pressure, and relative humidity). Consequently, the flow rate and concentration may be measured with good stability.

### Industrial Applicability

As can be seen from the foregoing description, a hydrogen flow/concentration meter according to the present disclosure is able to measure the flow rate and concentration of hydrogen accurately even if a mixed gas including hydrogen is in a high-humidity condition, and therefore, is applicable extensively as a measuring instrument for control to not only fuel cells and fuel cell vehicles in which such a situation arises but also in various other applications in which a fuel cell is used.

### Reference Signs List

| | |
|---|---|
| 1 | Measuring Flow Channel |
| 2, 3 | Ultrasonic Transducer |
| 4a | Transceiver Circuit |
| 4b | Sensor Unit |
| 4c | External Device |
| 5a | First Signal Processor |
| 5b | Second Signal Processor |
| 7 | Partition |
| 8 | Multilayer Flow Channel |
| 30 | Arithmetic Unit |
| 100 | Hydrogen Flow/Concentration Meter |

### Claims

1. A hydrogen flow/concentration meter comprising:

   a measuring flow channel, through which a mixed gas including hydrogen and water vapor flows;
   a pair of ultrasonic transducers arranged in the measuring flow channel to cross a flow of the mixed gas;
   a transceiver circuit configured to transmit and receive an ultrasonic wave between the pair of ultrasonic transducers;
   a first signal processor configured to process a signal provided by the transceiver circuit;
   a sensor unit configured to measure a temperature, pressure, and humidity of the mixed gas;
   a second signal processor configured to obtain, using the sensor unit, respective measured values of the temperature, pressure, and humidity of the mixed gas; and
   an arithmetic unit configured to calculate a flow rate and concentration of hydrogen in the mixed gas using not only a propagation time obtained by the first signal processor between the pair of ultrasonic transducers but also the respective measured values of the temperature, the pressure, and the humidity, all of which are obtained by the second signal processor.

2. A hydrogen flow/concentration meter comprising:

a measuring flow channel, through which a mixed gas including hydrogen and water vapor flows;

a pair of ultrasonic transducers arranged in the measuring flow channel to cross a flow of the mixed gas;

a transceiver circuit configured to transmit and receive an ultrasonic wave between the pair of ultrasonic transducers;

a first signal processor configured to process a signal provided by the transceiver circuit;

a second signal processor configured to acquire, from an external device, respective measured values of a temperature, pressure, and humidity of the mixed gas; and

an arithmetic unit configured to calculate a flow rate and concentration of hydrogen in the mixed gas using not only a propagation time obtained by the first signal processor between the pair of ultrasonic transducers but also the respective measured values of the temperature, the pressure, and the humidity, all of which are obtained by the second signal processor.

3. A hydrogen flow/concentration meter comprising:

a measuring flow channel, through which a mixed gas including hydrogen and water vapor flows;

a pair of ultrasonic transducers arranged in the measuring flow channel to cross a flow of the mixed gas;

a transceiver circuit configured to transmit and receive an ultrasonic wave between the pair of ultrasonic transducers;

a first signal processor configured to process a signal provided by the transceiver circuit;

a sensor unit configured to measure at least one of a temperature, pressure, or humidity of the mixed gas;

a second signal processor configured to obtain, using the sensor unit, a measured value of the at least one of the temperature, pressure, or humidity of the mixed gas and acquire, from an external device, a value of at least remaining one of the temperature, pressure, or humidity of the mixed gas as a measured value; and

an arithmetic unit configured to calculate a flow rate and concentration of hydrogen in the mixed gas using not only a propagation time obtained by the first signal processor between the pair of ultrasonic transducers but also respective measured values of the temperature, the pressure, and the humidity, all of which are obtained by the second signal processor.

4. The hydrogen flow/concentration meter according to any one of claims 1 to 3, wherein the measuring flow channel is configured as a multilayer flow channel partitioned by at least one partition.

FIG. 1

EP 4 667 880 A1

FIG. 2

First Signal Processor — 5a

Transceiver Circuit — 4a

Sensor Unit — 4b

Tp1  Pr  Hu  Tp2

100

1  2  7  8  10

18  19

S1

W  9  6  S2  3

*FIG. 3*

## FIG. 4

## FIG. 5

## INTERNATIONAL SEARCH REPORT

| | International application No. |
|---|---|
| | **PCT/JP2024/003864** |

**A.    CLASSIFICATION OF SUBJECT MATTER**

*G01F 1/66*(2022.01)i; *G01N 29/024*(2006.01)i
FI:   G01F1/66 101; G01N29/024

According to International Patent Classification (IPC) or to both national classification and IPC

**B.    FIELDS SEARCHED**

Minimum documentation searched (classification system followed by classification symbols)

G01F1/66-1/667; G01N29/024

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2003-317752 A (NISSAN MOTOR CO., LTD.) 07 November 2003 (2003-11-07) paragraphs [0051]-[0054], fig. 9 | 1-3 |
| Y | | 4 |
| Y | JP 2022-025751 A (PANASONIC INTELLECTUAL PROPERTY MANAGEMENT CO., LTD.) 10 February 2022 (2022-02-10) paragraphs [0018], [0019], fig. 1 | 4 |
| P, X | JP 2023-028677 A (PANASONIC INTELLECTUAL PROPERTY MANAGEMENT CO., LTD.) 03 March 2023 (2023-03-03) claims 1-2 | 1, 4 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/003864**

| Patent document cited in search report | | | Publication date (day/month/year) | Patent family member(s) | | | Publication date (day/month/year) |
|---|---|---|---|---|---|---|---|
| JP | 2003-317752 | A | 07 November 2003 | (Family: none) | | | |
| JP | 2022-025751 | A | 10 February 2022 | US<br>paragraphs [0021], [0022], fig. 1<br>WO<br>EP<br>CN | 2023/0296568<br><br>2022/024821<br>4191208<br>116157656 | A1<br><br>A1<br>A1<br>A | |
| JP | 2023-028677 | A | 03 March 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010091489 A